# EUROPEAN PATENT APPLICATION

(11) **EP 4 618 174 A1**
(43) Date of publication of application: **17.09.2025**
(21) Application number: 24170964.1
(22) Date of filing: 18.04.2024
(51) Int. Cl.: H01M 4/13, H01M 4/139, H01M 4/02

(54) **ELECTRODE**

(30) Priority: 11.03.2024 KR 20240033655
(71) Applicant: Hymson JY Korea Co., Ltd., Yongin-si Gyeonggi-do 16976 (KR)
(72) Inventor: JEKAL, Seok, 13624 Seongnam-si (KR); KIM, Kwang Ryul, 16701 Suwon-si (KR); SHENGYU, Zhao, Shenzhen City, 100102 (CN)
(74) Representative: Kurig, Thomas

(57) **Abstract**

Disclosed is an electrode. The electrode may include a current collector and an electrode layer disposed on at least one surface of the current collector. The electrode layer may include a cutting surface having a concave and convex shape.

## Description

### BACKGROUND

### 1. Technical Field

The present disclosure relates to an electrode and, particularly, to an electrode which has a long-term lifespan and is capable of being charged at high speed.

### 2. Related Art

As the demand for mobile devices, such as a mobile phone, a smartphone, a notebook, and a wearable device, for example, a smartwatch, smart glass, or a head mounted display (HMD), is increased, the demand for a secondary battery that supplies power to the mobile device is increased. Accordingly, a lot of research of the secondary battery is being carried out.

The secondary battery may be basically divided into a positive electrode, a negative electrode, a separator, and an electrolyte.

The secondary battery can produce electricity through a chemical reaction in which lithium ions move between a positive electrode active material and a negative electrode active material. Specifically, the secondary battery may be charged as lithium ions of the positive electrode active material move to a negative electrode, and may be discharged as lithium ions of the negative electrode active material discharge energy while returning to the positive electrode active material. As described above, lithium ions make a round trip between both electrodes (i.e., the positive electrode and the negative electrode). The secondary battery may be charged and discharged due to the conversion of energy through such a process.

An electrolyte plays a role as a moving passage of lithium ions. A separator functions to prevent the positive electrode and the negative electrode from coming into contact with each other.

An electrode of a lithium secondary battery may be manufactured by manufacturing active material slurry by dispersing an active material and a binder and then coating an active material layer on one surface of a current collector. When the active material slurry is coated on one surface of the current collector, a sliding phenomenon occurs. In this case, the sliding phenomenon means a phenomenon in which the active material slurry spreads.

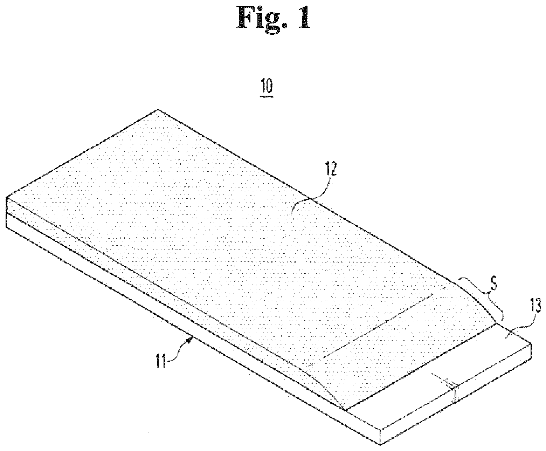

FIG. 1 is a diagram of an electrode according to a conventional technology.

Referring to FIG. 1, an electrode 10 may include an electrode layer 12 on one surface of a current collector 11.

If wet coating is performed on the current collector 11, a phenomenon in which slurry spreads may occur. Accordingly, sliding parts S may be formed at both ends of the electrode layer 12 through the sliding phenomenon. FIG. 1 illustrates only one end part of the electrode layer 12, but the sliding part S may also be identically formed at the other end part of the electrode layer 12.

The sliding parts S may be extended from both ends of a central part of the electrode layer 12, and may become gradually thin toward an end of the active material layer, that is, from a central part of the active material layer to the direction of a non-coating part 13 in which the active material layer has not been formed.

If a rolling process is performed, an area in which the sliding part S formed at one end of the electrode 10 has been formed may be reduced to some degree as the thickness of the center of the electrode 10 is reduced. However, this may become a cause to degrade some performance because the sliding part S is maintained by a predetermined area.

Specifically, if the sliding part S is present, the amount of loading at both ends of the active material layer may be formed to be lower than the amount of loading of the central part thereof. This may lead to a problem in that a secondary battery has a lower capacity than its design capacity.

Furthermore, the ratio of the positive electrode and the negative electrode in the non-coating part 13 (i.e., a tap part) of the electrode may be reversed due to the sliding part S. A physical isolation between the positive electrode and the negative electrode may occur. Furthermore, it may be difficult to maintain stable electrode quality due to difficult control of the sliding part S.

Furthermore, in an electrochemical device in which the electrode 10 having the sliding parts S formed therein has been adopted, Li may be precipitated and the electrochemical device may be degraded because a phenomenon in which an N/P balance between the positive electrode and the negative electrode is reversed occurs.

Accordingly, there is an urgent need for the development of a method of manufacturing an electrode including an electrode layer from which the sliding part S has been removed.

### SUMMARY

The present disclosure has been made in view of the above problems. An object to be achieved by some embodiments of the present disclosure is to maintain stable electrode quality.

It will be understood that technical problems of the present disclosure are not limited to the aforementioned problem and other technical problems not referred to herein will be clearly understood by those skilled in the art from the description below.

In an embodiment, an electrode may include a current collector and an electrode layer disposed on at least one surface of the current collector. The electrode layer may include a cutting surface having a concave and convex shape.

According to some embodiments of the present disclosure, the cutting surface may include a plurality of concave parts and a plurality of convex parts that are repeatedly formed in the width direction of the electrode.

According to some embodiments of the present disclosure, each of the plurality of concave parts may have a cross section that has a curve shape and that is concavely depressed toward an inside of the electrode layer.

According to some embodiments of the present disclosure, two virtual circles that adjoin each other, among virtual circles that are extended along pieces of curvature formed by cross sections of the plurality of concave parts, respectively, may form an overlapping surface.

According to some embodiments of the present disclosure, pieces of curvature formed by cross sections of the plurality of concave parts, respectively, may be identical with each other.

According to some embodiments of the present disclosure, each of the plurality of concave parts and the plurality of convex parts may be elongated in a direction perpendicular to the one surface of the current collector.

According to some embodiments of the present disclosure, the cutting surface may include a first cutting surface and a second cutting surface disposed between the current collector and the first cutting surface.

According to some embodiments of the present disclosure, the first cutting surface may include a plurality of first concave parts each depressed in a curve shape that is concave toward the inside of the electrode layer. The second cutting surface may include a plurality of second concave parts each depressed in a curve shape that is concave toward the inside of the electrode layer.

According to some embodiments of the present disclosure, the first cutting surface may be more depressed toward the inside of the electrode layer than the second cutting surface. A top surface of the second cutting surface may be defined as an area that is upwardly exposed because the first cutting surface is more depressed toward the inside of the electrode layer than the second cutting surface.

According to some embodiments of the present disclosure, curvature that is formed by each of the plurality of first concave parts and curvature that is formed by each of the plurality of second concave parts may be identical with each other.

According to some embodiments of the present disclosure, when the height of each of the first cutting surface and the second cutting surface is defined in a direction toward the one surface of the current collector, the height of the first cutting surface may be lower than the height of the second cutting surface.

According to some embodiments of the present disclosure, the cutting surface may be cut in a direction toward the one surface of the current collector.

According to some embodiments of the present disclosure, the electrode may further include a non-coating part that is defined as an area in which the electrode layer is not present on the one surface of the current collector.

Technical solutions which may be obtained by an embodiment of the present disclosure are not limited to the aforementioned solutions, and other technical solutions not mentioned herein will be clearly understood by those skilled in the art to which the present disclosure pertains from the description below.

Effects of the electrode according to embodiments of the present disclosure are described as follows.

According to some embodiment of the present disclosure, stable electrode quality can be maintained. A problem in that an electrode has a lower capacity than its design capacity can be solved. The charging and discharging speed of a battery can be improved. A reduction in performance of an electrode can be reduced, and the lifespan of an electrode can be increased.

It will be understood that effects obtained by the present disclosure are not limited to the aforementioned effect and other effects not referred to herein will be clearly understood by those skilled in the art from the description below.

### BRIEF DESCRIPTION OF THE DRAWINGS

Various embodiments of the present disclosure are described with reference to the accompanying drawings. In this case, like reference numbers are used to refer to like elements. In the following embodiments, numerous specific details are set forth so as to provide a thorough understanding of one or more embodiments for purposes of explanation. It will be apparent, however, that such embodiment(s) may be practiced without these specific details.
FIG. 1 is a diagram of an electrode according to a conventional technology.
FIG. 2 is a perspective view illustrating a process of etching a part of an electrode layer according to some embodiments of the present disclosure.
FIG. 3 is a perspective view illustrating an example of an electrode layer in which a cutting surface having a concave and convex shape according to some embodiments of the present disclosure has been illustrated.
FIG. 4 is a cross-sectional view taken along line A-A' in FIG. 3 illustrating an example of a cross section of a cutting surface part according to some embodiments of the present disclosure.
FIG. 5 is a cross-sectional view taken along line A-A' in FIG. 3 illustrating another example of a cross section of a cutting surface part according to some embodiments of the present disclosure.
FIG. 6 is another perspective view illustrating an example of a cutting surface according to some embodiments of the present disclosure.

### DETAILED DESCRIPTION

Hereinafter, various embodiments of an electrode, a secondary battery, and a method of controlling the electrode according to the present disclosure will be described in detail with reference to the accompanying drawings. Regardless of the reference numerals, the same or similar components are assigned the same reference numerals, and redundant descriptions thereof will be omitted.

Objects and effects of the present disclosure, and technical configurations for achieving the objects and effects will become apparent with reference to embodiments described below in detail in conjunction with the accompanying drawings. In describing one or more embodiments of the present disclosure, when it is determined that the detailed description of the related well-known technology may obscure the gist of the present disclosure, the detailed description thereof will be omitted.

Terms used in the present disclosure are defined in consideration of functions in the present disclosure, and may be changed depending on a user, an operator's intention or practice. Furthermore, the accompanying drawings are only for making one or more embodiments of the present disclosure easily understood, and the technical spirit of the present disclosure is not limited by the accompanying drawings. It is to be appreciated that all changes, equivalents, and substitutes that do not depart from the spirit and technical scope of the present disclosure are encompassed in the present disclosure.

Terms including ordinal numbers, such as a "first" and a "second", may be used to describe various components, but the components are not restricted by the terms. The terms are used to only distinguish one component from the other components. Therefore, a first component mentioned below may be a second component within the technical spirit of the present description.

When it is described that one component is "connected" or "coupled" the other component, it should be understood that one component may be directly connected or coupled to the other component, but a third component may exist between the two components. In contrast, when it is described that one component is "directly connected" or "directly coupled" to the other component, it should be understood that a third component does not exist between the two components.

An expression of the singular number includes an expression of the plural number unless clearly defined otherwise in the context. That is, a singular expression in the present disclosure and in the claims should generally be construed to mean "one or more" unless specified otherwise or if it is not clear from the context to refer to a singular form.

In the present disclosure, it is to be understood that a term, such as "include" or "have", is intended to designate that a characteristic, a number, a step, an operation, a component, a part or a combination of them described in the specification is present, and does not exclude the presence or addition possibility of one or more other characteristics, numbers, steps, operations, components, parts, or combinations of them in advance.

A term "or" in the present disclosure should be understood as "or" in an implicit sense not "or" in an exclusive sense. That is, unless otherwise specified or clear from context, "X employs A or B" is intended to mean one of natural implicit substitutions. That is, when X employs A; when X employs B; or when X employs both A and B, "X employs A or B" can be applied to any one of these cases. Furthermore, the term "and/or" as used in the present disclosure should be understood to refer to and encompass all possible combinations of one or more of listed related items.

Unless otherwise defined, all terms (including technical and scientific terms) used in the present disclosure may be used with meanings that can be commonly understood by those of ordinary skill in the technical field of the present disclosure. Also, terms defined in generally used dictionary are not to be excessively interpreted unless specifically defined.

However, the present disclosure is not limited to embodiments disclosed below and may be implemented in various different forms. Some embodiments of the present disclosure are provided merely to fully inform those of ordinary skill in the technical field of the present disclosure of the scope of the present disclosure, and the present disclosure is only defined by the scope of the claims. Therefore, the definition should be made based on the content throughout the present disclosure.

FIG. 1 is a diagram of an electrode according to a conventional technology.

Referring to FIG. 1, an electrode 10 may include a current collector 11. The electrode 10 may include an electrode layer 12. The electrode layer 12 may be disposed at least on one surface of the current collector 11.

The electrode 10 may include a non-coating part 13. When the electrode layer 12 is disposed on one surface of the current collector 11, the non-coating part 13 may be defined as an area in which the electrode layer 12 is not present on one surface of the current collector 11. The non-coating part 13 may be defined as an exposed surface portion of the current collector 11 in which the electrode layer 12 is not disposed. The non-coating part 13 may be adjacent to one end of the electrode layer 12. The non-coating part 13 may adjoin a sliding part S.

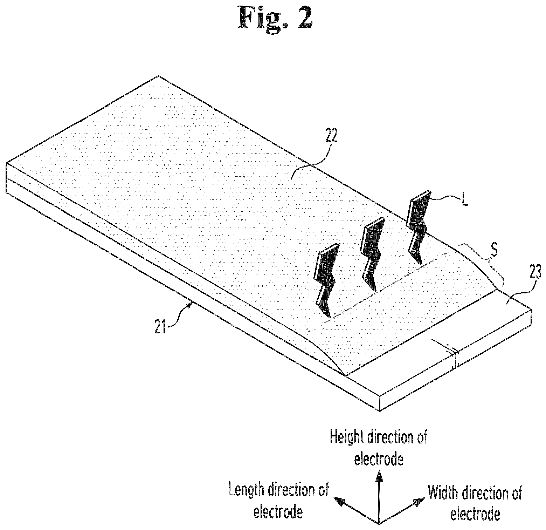

In the case of the conventional electrode 10, the sliding parts S may be formed at both ends of the electrode layer 12 on which wet coating has been performed due to a phenomenon in which slurry spreads because the wet coating is performed on the current collector 11. In an electrochemical device in which the electrode 10 having the sliding parts S formed therein has been adopted, Li may be precipitated and the electrochemical device may be degraded because a phenomenon in which an N/P balance between a positive electrode and a negative electrode is reversed occurs. An electrode according to an embodiment of the present disclosure for solving such a problem of the conventional electrode 10 is described more specifically with reference to FIGS. 2 to 6.

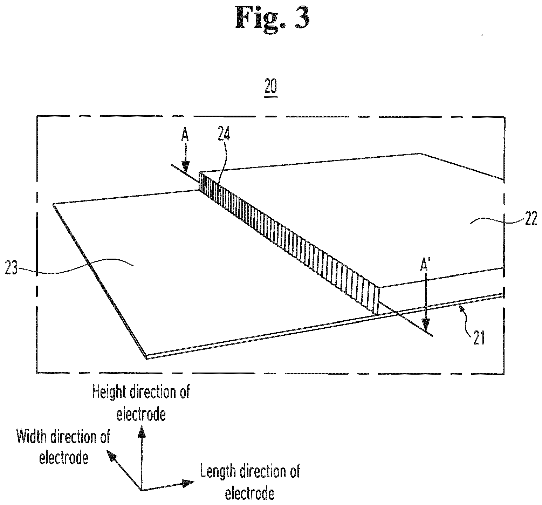

FIG. 2 is a perspective view illustrating a process of etching a part of an electrode layer according to some embodiments of the present disclosure. FIG. 3 is a perspective view illustrating an example of an electrode layer in which a cutting surface having a concave and convex shape according to some embodiments of the present disclosure has been illustrated.

Referring to FIG. 2, a sliding part S may be removed from an electrode layer 22. When the sliding part S is cut from the electrode layer 22, an electrode 20 illustrated in FIG. 3 may be formed.

According to some embodiment of the present disclosure, the sliding part S may be removed by using laser ablation. In this case, the laser ablation is to ablate, in a specific pattern shape, a negative electrode material, such as graphite or silicon coated on a negative electrode that forms a secondary battery, or a positive electrode material, such as lithium iron phosphate (LFP), nickel cobalt manganese (NCM), or nickel cobalt aluminum oxide (NCA) coated on a positive electrode that forms the secondary battery, by using a laser. Specifically, the laser ablation may mean that a condensed portion is removed by concentrating a laser beam L on a sample by using a high output pulse laser.

In an embodiment of the present disclosure, in order to prevent the quality and function of the electrode from being degraded, upon laser ablation, the output wavelength of the laser beam may be 355 nm to 2000 nm, and a pulse repetition rate may be 1 to 10,000 kHz. Furthermore, in general, a laser spot shape of a processing part may be a circle, but the present disclosure is not limited thereto.

In an embodiment of the present disclosure, the sliding part S may be removed by the laser beam L (FIG. 2). The laser beam L may be radiated toward a direction toward one surface of a current collector 21, that is, a direction perpendicular to one surface of the current collector 21 or the electrode layer 22 in the height direction of the electrode 20.

The electrode 20 may include the current collector 21, the electrode layer 22, and a non-coating part 23, but the present disclosure is not limited thereto. The electrode 20 may include components that are more or fewer than the aforementioned components.

The current collector 21 may be formed in a thin plate shape. The current collector 21 may support one surface of the electrode layer 22.

The electrode layer 22 may be disposed on at least one surface of the current collector 21

In an embodiment of the present disclosure, the electrode 20 may be a positive electrode or a negative electrode. The electrode layer 22 may be a positive electrode active material layer or a negative electrode active material layer.

For example, if the electrode layer 22 is the positive electrode active material layer, lithium-containing transition metal oxide may be used as an electrode layer. For example, the lithium-containing transition metal oxide may be any one selected from a group consisting of Liₓ(NiₐCo_{b}Mn_{c})O₂(0.5<x<1.3, 0<a<1, 0<b<1, 0<c<1, a+b+c=1), LiₓFePO₄(0.5<x<1.3), LiₓCoO₂(0.5<x<1.3), LiₓNiO₂(0.5<x<1.3), LiₓMnO₂(0.5<x<1.3), LiₓMn₂O₄ (0.5<x<1.3), LiₓNi_{1-y}Co_{y}O₂ (0.5<x<1.3, 0<y<1), LiₓCo₁-_{y}Mn_{y}O₂ (0.5<x<1.3, 0≤y<1), LiₓNi_{1-y}Mn_{y}O₂(0.5<x<1.3, o≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), and LiₓCoPO₄(0.5<x<1.3) or a mixture of two or more of them. The lithium-containing transition metal oxide may be coated with metal or metal oxide, such as aluminum (Al). Furthermore, in addition to the lithium-containing transition metal oxide, sulfide, selenide, and halide may also be used as the electrode layer, but the present disclosure is not limited to such examples.

As another example, if the electrode layer 22 is the negative electrode active material layer, carbon such as nongraphitized carbon or graphite-based carbon, metal composite oxide such as LiₓFe₂O₃ (0≤x≤1), LiₓWO₂ (0≤x≤1), or SnₓMe₁₋ₓMe'_{y}O_{z} (Me: Mn, Fe, Pb, Ge; Me': Al, B, P, Si, Group 1, Group 2, and Group 3 elements in the periodic table, halogen; 0≤x≤1; 1≤y≤3; 1≤z≤8), lithium metal, a lithium alloy, a silicon-based alloy, or a tin-based alloy, silicon-based oxide such as SiO, SiO/C, and SiO₂, metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅, conductive polymer such as polyacetylene, or a Li-Co-Ni-based material may be used as the negative electrode active material layer, but the present disclosure is not limited to the aforementioned examples.

When the electrode layer 22 is disposed on one surface of the current collector 21, the non-coating part 21 may be defined as an area in which the electrode layer 22 is not present on the one surface of the current collector 21. That is, the non-coating part 23 may be defined as an exposed surface portion of the current collector 11 in which the electrode layer 22 is not disposed.

Referring to FIG. 3, the electrode 20 may include a cutting surface 24. The cutting surface 24 may be formed by cutting or etching one end of the electrode layer 22. That is, the cutting surface 24may be formed at one end of the electrode layer 22.

For example, as illustrated in FIG. 2, the cutting surface 24 may be formed by etching a part of the electrode layer 22 through the laser beam L. However, this is merely an example, and a method of forming the cutting surface 24 is not limited thereto.

The cutting surface 24 may be cut in a direction toward one surface of the current collector 21, that is, in the height direction of the electrode 20. The cutting surface 24 may be lengthily formed in the width direction of the electrode 20.

The cutting surface 24 may have a concave and convex shape. The concave and convex shape may mean a shape in which concave and convex shapes are continuously formed while intersecting each other. For example, when the electrode 20 is viewed from the top, the concave and convex shape may form a wave pattern on the basis of a plane of the electrode 20.

Specifically, the cutting surface 24 may include a plurality of bent parts that are arranged in parallel in the width direction of the electrode 20. In this case, a lateral cross section of the bent part may have a semi-circular shape, and an outer circumferential surface of the bent part may have an orthogonal projection of an arc.

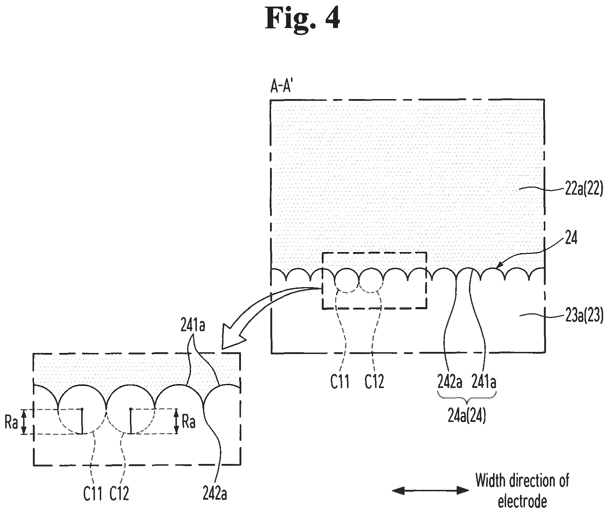

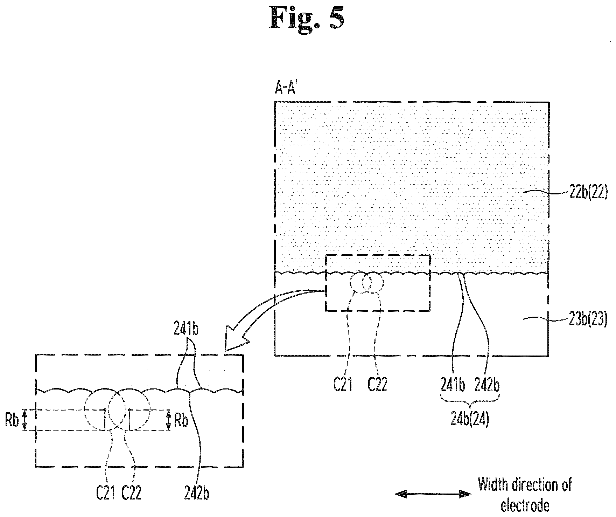

FIG. 4 is a cross-sectional view taken along line A-A' in FIG. 3 illustrating an example of a cross section of a cutting surface part according to some embodiments of the present disclosure. FIG. 5 is a cross-sectional view taken along line A-A' in FIG. 3 illustrating another example of a cross section of a cutting surface part according to some embodiments of the present disclosure.

Referring to FIGS. 4 and 5, the cutting surface 24 may include a concave part 241 and a convex part 242. The concave part 241 and the convex part 242 may be repeatedly formed while intersecting each other in the width direction of the electrode 20. Accordingly, the cutting surface 24 may include a plurality of concave parts and a plurality of convex parts.

In an embodiment of the present disclosure, the convex part 242 may be disposed between two concave parts 241 that are adjacent to each other. Furthermore, the concave part 241 may be disposed between two convex parts 242 that are adjacent to each other.

The concave part 241 and the convex part 242 may be formed at one end of the electrode layer 22.

The concave part 241 may have a shape in which the concave part has been depressed toward the inside of the electrode layer 22 in the length direction of the electrode 20. The concave part 241 may include a cross section having a curve shape. That is, the concave part 241 may have a shape in which the concave part has been concavely depressed in a curve shape toward the inside of the electrode layer 22. For example, when the electrode 20 is viewed from the top, the cross section of the concave part 241 may include a curve shape.

The convex part 242 may have a shape in which the convex part has protruded toward the outside of the electrode layer 22 in the length direction of the electrode 20. When the electrode 20 is viewed from the top, the width of a cross section of the convex part 242 may be gradually narrowed toward the end of the outside of the convex part 242. The convex part 242 may form a pointed shape.

Both ends of the cross section of the convex part 242 may be concavely depressed toward the inside thereof. The width of the cross section of the convex part 242 may be gradually reduced toward an end thereof.

The cross section of the concave part 241 having the curve shape may form predetermined curvature. When a virtual line is extended along the curvature that is formed by the cross section of the concave part 241, a virtual circle may be formed. The cross section of the concave part 241 may be included in a part of the virtual circle.

Referring to FIG. 4, a cutting surface 24a may include a concave part 241a and a convex part 242a. Virtual circles C11, C12, ... that are extended along pieces of curvature formed by cross sections of the plurality of concave parts 241a, respectively, may be defined. Two virtual circles C11 and C12 that adjoin each other, among the virtual circles that are extended along the pieces of curvature formed by the cross sections of the plurality of concave parts 241a, respectively, may come into line contact with each other or may not come into contact with each other. Pieces of curvature and radii Ra that are formed by the virtual circles C11, C12, ..., respectively, may be identical with each other.

The pieces of curvature that are formed by the cross sections of the plurality of concave parts 241a, respectively, may be identical with each other. The pieces of curvature that are formed by the virtual circles C11 and C12, respectively, may be identical with each other.

The convex part 242a may be formed between the virtual circles C11, C12, .... The length of the convex part 242a may be smaller than the length of the concave part 241a in the width direction of the electrode 20.

In FIG. 4, the plurality of convex parts 242a and the plurality of concave parts 241a that form the cutting surface 24a may be formed by etching the sliding part S (FIG. 2) through laser ablation.

According to some embodiment of the present disclosure, if an electrode roll having a width of 600 mm is etched, assuming that the length of a laser etch portion is 400 mm, the scan speed of a laser scanner is 1m/sec, and a pulse repetition rate is 10 kHz, a concave and convex shape may be formed so that a total of 4,000 virtual circles C11, C12, ... are disposed in the length of 400 mm. Furthermore, assuming that the diameter of each of the virtual circles C11, C12, ... that are extended along the pieces of curvature formed by the cross sections of the plurality of concave parts 241a, respectively, is 100 *µ*m, 10 virtual circles are included in a processing part of 1 mm. In this case, if the pulse repetition rate is increased to 20 kHz, as illustrated in FIG. 5, 20 virtual circles C21, C22, ... that are extended along the pieces of curvature formed by the cross sections of the plurality of concave parts 241b are included within the processing part of 1 mm. However, although the pulse repetition rate is changed, the diameters of the virtual circles C21, C22, ... are not changed.

Specifically, referring to FIG. 5, a cutting surface 24b may include a concave part 241b and a convex part 242b. Virtual circles C21, C22, ... that are extended along pieces of curvature formed by cross sections of the plurality of concave parts 241b, respectively, may be defined. Two virtual circles C21 and C22 that adjoin each other, among the virtual circles that are extended along the pieces of curvature formed by the cross sections of the plurality of concave parts 241b, respectively, may form an overlapping surface. Pieces of curvature and radii Rb that are formed by the virtual circles C21, C22, ..., respectively, may be identical with each other.

The convex part 242b may be formed between the virtual circles C21, C22, .... The length of the convex part 242b may be smaller than the length of the concave part 241b in the width direction of the electrode 20.

In FIG. 5, the plurality of convex parts 242b and the plurality of concave parts 241b that form the cutting surface 24b may be formed by etching the sliding part S (FIG. 2) through laser ablation.

Further referring to FIG. 3 along with FIGS. 4 and 5, each of the plurality of concave parts 241 and the plurality of convex parts 242 may be elongated in a direction perpendicular to one surface of the current collector 21, that is, in the height direction of the electrode 20. In this case, each of the plurality of concave parts 241 may have a shape of a part of the outer surface of a cylinder.

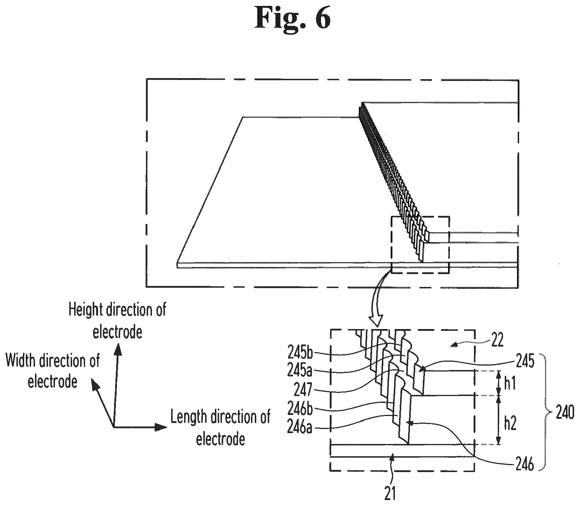

FIG. 6 is another perspective view illustrating an example of a cutting surface according to some embodiments of the present disclosure.

For the etching of a secondary battery, in general, 2 to 10 laser scans may be repeated. In this case, a predetermined amount of a material may be left on the boundary side of an etch pattern. As illustrated in FIG. 6, a multi-stage cutting surface may be processed.

Referring to FIG. 6, a cutting surface 240 may include a first cutting surface 245 and a second cutting surface 246. In this case, the second cutting surface 246 may be disposed between a current collector 21 and the first cutting surface 245.

The first cutting surface 245 and the second cutting surface 246 may be formed at one end of an electrode layer 22. The first cutting surface 245 may be disposed over the second cutting surface 246. The second cutting surface 246 may be disposed under the first cutting surface 245. The second cutting surface 246 may be disposed adjacent to the current collector 21.

The first cutting surface 245 and the second cutting surface 246 may each include a cross section having a concave and convex shape. For example, the first cutting surface 245 and the second cutting surface 246 may each include a wave pattern when viewed from the top.

The first cutting surface 245 and the second cutting surface 246 may include concave parts 245a and 246a, respectively, and convex parts 245b and 246b, respectively. The concave part 245a and the convex part 245b may be repeatedly formed in the width direction of the electrode 20. Furthermore, the concave part 246a and the convex part 246b may be repeatedly formed in the width direction of the electrode 20.

Specifically, the first cutting surface 245 may include a first concave part 245a and a first convex part 245b. The first concave part 245a and the first convex part 245b may be repeatedly formed in the width direction of the electrode 20. Furthermore, the second cutting surface 246 may include a second concave part 246a and a second convex part 246b. The second concave part 246a and the second convex part 246b may be repeatedly formed in the width direction of the electrode 20. The first concave part 245a may be depressed in a curve shape that is concave toward the inside of the electrode layer 22 in the length direction of the electrode 20. The second concave part 246a may be depressed in a curve shape that is concave toward the inside of the electrode layer 22 in the length direction of the electrode 20. Curvature of the first concave part 245a and curvature of the second concave part 256a may be identical with each other.

Each of the first cutting surface 245 and the second cutting surface 246 may have the shape of the cutting surface 24 that has been described with reference to FIGS. 3 to 5.

The first cutting surface 245 may be formed by cutting or etching the cutting surface 24 in FIG. 3.

The first cutting surface 245 may be more depressed into the inside of the electrode layer 22 than the second cutting surface 246 in the length direction of the electrode 20. The second cutting surface 246 may more protrude to the outside of the electrode layer 22 than the first cutting surface 245. That is, the first cutting surface 245 may be disposed more on the inside than the second cutting surface 246 in the length direction of the electrode 20.

A top surface 247 of the second cutting surface 246 may be defined as an area that is upward exposed because the first cutting surface 245 is more depressed into the inside of the electrode layer 22 than the second cutting surface 246.

An up and down height h1 of the first cutting surface 245 may be lower than an up and down height h2 of the second cutting surface 246. The up and down direction may be defined as the height direction of the electrode or a direction toward one surface of the current collector 21.

A method of manufacturing the electrode 20 according to some embodiments of the present disclosure is as follows.

The electrode 20 according to some embodiments of the present disclosure may include the current collector 21, the active material layer (i.e., the electrode layer 22) that is disposed on one surface of the current collector 21 and that is an area formed by stacking active material slurry including an active material, a conductive material, and a binder, and the non-coating part 23 that is disposed on the one surface of the current collector 21 and that is an area in which the active material layer has not been stacked.

If the electrode is a positive electrode and the active material is a positive electrode active material, in general, the positive current collector 21 may have a thickness of about 3 to 50 *µ*m. The positive current collector 21 is not specially limited as long as the positive current collector has high conductivity while not causing a chemical change in a corresponding battery. For example, stainless steel, aluminum, nickel, titanium, or fired carbon, or aluminum or stainless steel each surface-treated with carbon, nickel, titanium, or silver may be used as the positive current collector 21.

In order to increase the bonding force of the positive electrode active material, fine concave and convex parts may be formed on a surface of the positive current collector 21. The positive current collector 21 may have various shapes, such as a film, a sheet, foil, a net, a porous material, a foam, and nonwoven fabric.

Furthermore, in an embodiment of the present disclosure, in general, the conductive material that is included in the active material layer may be added in an amount of 0.2 to 5 w% on the basis of a total weight of a mixture including the positive electrode active material. The conductive material is not specially limited if the conductive material has conductivity while not causing a chemical change in a corresponding battery.

For example, graphite such as natural graphite or artificial graphite, carbon black such as carbon black, acetylene black, Ketjen black, channel black, furnace black, lamp black, or summer black, conductive fiber such as carbon fiber or metal fiber, fluorocarbon, aluminum, metal powder such as nickel powder, conductive whiskey such as zinc oxide or potassium titanate, conductive metal oxide such as titanium oxide, or a conductive material such as a polyphenylene derivative may be used as the conductive material.

In an embodiment of the present disclosure, the binder that is included in the active material layer 22 is a component that helps a combination of the active material and the conductive material and a combination with the current collector. In general, the binder may be added in an amount of 0.2 to 5 w% on the basis of a total weight of slurry including the positive electrode active material. Examples of the binder may include polyvinylidene fluoride, polyvinyl alcohol, or carboxymethylcellulose (CMC), starch, hydroxypropylcellulose, regenerated cellulose, polyvinylpyrrolidone, tetrafluoroethylene, polyethylene, polypropylene, ethylene-propylene-dienter polymer (EPDM), sulfonation EPDM, styrene-butyrene rubber, fluorine rubber, and various copolymers.

If the electrode is a negative electrode, the negative current collector 21 is not specially limited if the negative current collector has high conductivity while not causing a chemical change in a battery.

For example, copper, stainless steel, aluminum, nickel, titanium, fired carbon, copper or stainless steel each surface-treated with carbon, nickel, titan, or silver, or an aluminum-cadmium alloy may be used as the negative current collector.

Furthermore, in general, the negative current collector 21 may have a thickness of 3 to 50 *µ*m. As in the positive current collector, the bonding force of the negative electrode active material may be increased by forming fine concave and convex parts on a surface of the current collector. For example, the negative current collector 21 may be formed to have various shapes, such as a film, a sheet, foil, a net, a porous material, a foam, and nonwoven fabric. Furthermore, a conductive material and a binder that are included in the active material layer may be the same as those that have been described in connection with the positive electrode.

According to some embodiment of the present disclosure, the electrode layer 22 may be formed by applying slurry for the electrode layer on one surface of the current collector 21 and drying the slurry. In this case, the slurry for the electrode layer 22 may be applied and dried so that the non-coating part 23, that is, an area in which the slurry for the electrode layer is not present, may be formed on the one surface of the current collector 21. In this case, the electrode layer 22 may include the sliding part S that comes into contact with the non-coating part 23 because the height of the electrode layer 22 in an area that is connected to the non-coating part 23 becomes smaller than the height of the center of the electrode layer 22.

If the slurry for the electrode layer 22 is applied on the current collector 21, the current collector 21 in which the electrode layer 22 has been formed may be rolled. In this case, any process that is performed in a common electrode may be unlimitedly applied as a rolling process. The thickness of the electrode layer 22 may have a desired level through the rolling process.

After the current collector 21 in which the electrode layer 22 has been formed is rolled, the sliding part S of the electrode layer 22 may be removed. The sliding part S may include a portion that is extended from both ends at the central part of the electrode layer 22 and the thickness of which is gradually reduced toward the non-coating part 23 in which the electrode layer 22 has not been formed.

The sliding part S may be removed by using various etching methods that are commonly performed unless the methods do not generate physical and chemical modifications in the current collector 21 and the electrode layer 22 that remains.

According to some embodiment of the present disclosure, the sliding part S may be removed by using laser ablation, which has been described in detail and thus a detailed description thereof is omitted.

In an embodiment of the present disclosure, the shape of the electrode described with reference to FIGS. 3 to 6 may be formed through the laser ablation. For the laser ablation, in general, 2 to 10 laser scans may be repeated. In this case, a predetermined amount of a material may be left on the boundary side of an etch pattern. The multi-stage cutting surface may be processed as illustrated in FIG. 6.

According to some embodiment of the present disclosure, the removal of the sliding part of the electrode layer may be performed after the rolling or may be performed after the rolling or notching.

According to some embodiment of the present disclosure, when the negative electrode, the positive electrode, the positive electrode active material layer, and the negative electrode active material layer are subjected to laser notching by using a pulse laser, the cutting surface that is cut through the laser notching may have a shape corresponding to the shape of the cutting surface 24 of the electrode layer 22, which has been described with reference to FIGS. 3 to 6, but the present disclosure is not limited thereto.

In an embodiment of the present disclosure, the laser notching may mean a process of forming the electrode on an electrode roll by using a laser beam. In general, in the case of a positive electrode, the laser notching may be performed in a way to coat an insulating material, such as ceramic, on an aluminum thin plate, then coat an NCM, NCA, or LFP material, and cut an electrode roll in the form of an electrode by using a laser notching machine. In the case of a negative electrode, the laser notching may be performed in a way to coat graphite or SI-C on a copper thin plate instead of an aluminum thin plate and then form an electrode by using a laser notching machine. In this case, as in the laser ablation, a pulse laser may be used in the laser notching machine, but the present disclosure is not limited thereto.

A secondary battery according to an embodiment of the present disclosure may include a positive electrode, a negative electrode, and a separator that is present between the positive electrode and the negative electrode. The positive electrode or the negative electrode may be the aforementioned electrode according to some embodiments of the present disclosure.

**The** separator that will be applied along with the electrode according to an embodiment of the present disclosure is not specially limited. An insulating thin film that is present between the positive electrode and the negative electrode, that separates the positive electrode and the negative electrode, and that has high ion transmittance and mechanical strength may be used as the separator. In general, any film that is used as the separator in a secondary battery may be unlimitedly used.

Specifically, a porous polymer film, for example, a porous polymer film manufactured by using a polyolefin-based polymer, such as ethylene homopolymer, propylene homopolymer, ethylene/butene copolymer, ethylene/hexene copolymer, or ethylene/methacrylate copolymer, or a stack structure having two or more layers of them may be used as the separator. Furthermore, common porous nonwoven fabric, for example, nonwoven fabric made of high melting-point glass fiber or polyethylene terephthalate fiber may be used as the separator.

Furthermore, in order to secure heat resistance or mechanical strength, a separator on which inorganic particles, binder polymer, or a mixture of the inorganic particles and the binder polymer has been coated may be used. The separator may be selectively used as a single-layer or multi-layer structure. Furthermore, if a solid electrolyte, such as polymer, is used as an electrolyte, a solid electrolyte may also play a role as the separator.

According to at least one of the some embodiments of the present disclosure, a phenomenon in which an N/P balance between the positive electrode and the negative electrode is reversed can be prevented. A Li precipitation phenomenon can be suppressed by calculating a concentration of an electrolyte that is generated in the sliding part. An overvoltage and cycle characteristic of a secondary battery in which the electrode has been adopted can be improved. A bonding force between the electrode on the end side and the separator can be improved.

According to one of the some embodiments of the present disclosure, there are advantages in that the charging and discharging speed of a secondary battery can be increased and the lifespan of a secondary battery can be increased.

In an embodiment of the present disclosure, the electrode may not be limitedly applied to the aforementioned some embodiments. Some or all of the some embodiments may be selectively combined and constructed so that the some embodiments are modified in various ways.

Although the present disclosure has been described with reference to the accompanying drawings, this is only an embodiment and the present disclosure is not limited to a specific embodiment. Various contents that can be modified by those of ordinary skill in the art to which the present disclosure belongs also belong to the scope of rights according to the claims. In addition, such modifications should not be understood separately from the technical spirit of the present disclosure.

## Claims

1. An electrode comprising:
a current collector; and
an electrode layer disposed on at least one surface of the current collector,
**characterized in that** the electrode layer comprises a cutting surface having a concave and convex shape.

2. The electrode of claim 1, wherein the cutting surface comprises a plurality of concave parts and a plurality of convex parts that are repeatedly formed in a width direction of the electrode.

3. The electrode of claim 2, wherein each of the plurality of concave parts has a cross section that has a curve shape and that is concavely depressed toward an inside of the electrode layer.

4. The electrode of claim 3, wherein two virtual circles that adjoin each other, among virtual circles that are extended along pieces of curvature formed by cross sections of the plurality of concave parts, respectively, form an overlapping surface.

5. The electrode of claim 3, wherein pieces of curvature formed by cross sections of the plurality of concave parts, respectively, are identical with each other.

6. The electrode of claim 3, wherein each of the plurality of concave parts and the plurality of convex parts is elongated in a direction perpendicular to the one surface of the current collector.

7. The electrode of claim 2, wherein the cutting surface comprises:
a first cutting surface; and
a second cutting surface disposed between the current collector and the first cutting surface.

8. The electrode of claim 7, wherein:
the first cutting surface comprises a plurality of first concave parts each depressed in a curve shape that is concave toward an inside of the electrode layer, and
the second cutting surface comprises a plurality of second concave parts each depressed in a curve shape that is concave toward the inside of the electrode layer.

9. The electrode of claim 8, wherein:
the first cutting surface is more depressed toward the inside of the electrode layer than the second cutting surface, and
a top surface of the second cutting surface is defined as an area that is upwardly exposed because the first cutting surface is more depressed toward the inside of the electrode layer than the second cutting surface.

10. The electrode of claim 8, wherein curvature that is formed by each of the plurality of first concave parts and curvature that is formed by each of the plurality of second concave parts are identical with each other.

11. The electrode of claim 7, wherein when a height of each of the first cutting surface and the second cutting surface is defined in a direction toward the one surface of the current collector, the height of the first cutting surface is lower than the height of the second cutting surface.

12. The electrode of claim 2, wherein the cutting surface is cut in a direction toward the one surface of the current collector.

13. The electrode of claim 1, further comprising a non-coating part that is defined as an area in which the electrode layer is not present on the one surface of the current collector.

## Amended claims

### Amended claims in accordance with Rule 137(2) EPC.

1. An electrode comprising:
a current collector; and
an electrode layer disposed on at least one surface of the current collector,
**characterized in that** the electrode layer comprises a cutting surface having a concave and convex shape,
wherein the cutting surface comprises a plurality of concave parts and a plurality of convex parts that are repeatedly formed in a width direction of the electrode,
wherein each of the plurality of concave parts has a cross section that has a curve shape and that is concavely depressed toward an inside of the electrode layer, and
wherein each of the plurality of concave parts and the plurality of convex parts is elongated in a direction perpendicular to the one surface of the current collector.

2. The electrode of claim 1, wherein two virtual circles that adjoin each other, among virtual circles that are extended along pieces of curvature formed by cross sections of the plurality of concave parts, respectively, form an overlapping surface.

3. The electrode of claim 1, wherein pieces of curvature formed by cross sections of the plurality of concave parts, respectively, are identical with each other.

4. The electrode of claim 1, wherein the cutting surface comprises:
a first cutting surface; and
a second cutting surface disposed between the current collector and the first cutting surface.

5. The electrode of claim 4, wherein:
the first cutting surface comprises a plurality of first concave parts each depressed in a curve shape that is concave toward an inside of the electrode layer, and
the second cutting surface comprises a plurality of second concave parts each depressed in a curve shape that is concave toward the inside of the electrode layer.

6. The electrode of claim 5, wherein:
the first cutting surface is more depressed toward the inside of the electrode layer than the second cutting surface, and
a top surface of the second cutting surface is defined as an area that is upwardly exposed because the first cutting surface is more depressed toward the inside of the electrode layer than the second cutting surface.

7. The electrode of claim 5, wherein curvature that is formed by each of the plurality of first concave parts and curvature that is formed by each of the plurality of second concave parts are identical with each other.

8. The electrode of claim 4, wherein when a height of each of the first cutting surface and the second cutting surface is defined in a direction toward the one surface of the current collector, the height of the first cutting surface is lower than the height of the second cutting surface.

9. The electrode of claim 1, wherein the cutting surface is cut in a direction toward the one surface of the current collector.

10. The electrode of claim 1, further comprising a non-coating part that is defined as an area in which the electrode layer is not present on the one surface of the current collector.
